# EUROPÄISCHE PATENTSCHRIFT

(11) **EP 2 890 548 B1**
(45) Veröffentlichungstag und Bekanntmachung des Hinweises auf die Patenterteilung: **05.04.2017**
(21) Anmeldenummer: 13756021.5
(22) Anmeldetag: 21.08.2013
(51) Int. Cl.: B29C 67/00

(54) **VERFAHREN ZUM AUFBAU EINES FORMKÖRPERS**
METHOD FOR BUILDING UP AN ARTICLE
PROCÉDÉ DESTINÉ À LA FABRICATION D'UN ARTICLE

(30) Priorität: 28.08.2012 EP 12182047
(43) Veröffentlichungstag der Anmeldung: 08.07.2015
(73) Patentinhaber: Ivoclar Vivadent AG, 9494 Schaan (LI); Technische Universität Wien, 1040 Wien (AT)
(72) Erfinder: STAMPFL, Jürgen, A-1050 Wien (AT); HOMA, Johannes, A-1130 Wien (AT); BENEDIKT, Johannes, 3400 Klosterneuburg (AT); MITTERAMSKOGLER, Gerald, A-1080 Wien (AT); EBERT, Jörg, CH-9470 Buchs (CH); LAUBERSHEIMER, Jürgen, CH-9470 Buchs (CH); WACHTER, Wolfgang, 9494 Schaan (LI)
(74) Vertreter: Uexküll & Stolberg
(86) Internationale Anmeldenummer: PCT/EP2013/067375
(87) Internationale Veröffentlichungsnummer: WO 2014/033027

(56) Entgegenhaltungen:
- EP-A1- 1 894 704
- EP-A2- 2 186 625
- WO-A1-2012/009630
- WO-A2-02/27408
- US-A1- 2009 184 444

## Beschreibung

Die Erfindung betrifft ein Verfahren zum Aufbau eines Formkörpers aus flüssigem, photopolymerisierbarem Material unter Anwendung einer lithographiebasierten generativen Fertigung (Rapid Prototyping), bei dem an einer Bauplattform eine Schicht aus viskosem, flüssigen Material definiert wird, die Schicht von einer Belichtungseinheit in einem Belichtungsgebiet mit vorgegebener Kontur durch Belichten polymerisiert wird, an der polymerisierten Schicht eine weitere Schicht aus photopolymerisierbarem Material definiert wird, die zuletzt definierte Schicht in einem Belichtungsgebiet mit für die zuletzt definierte Schicht vorgegebener Kontur durch Belichten polymerisiert wird, und die letzten beiden Schritte wiederholt werden, bis durch die Abfolge von ausgehärteten Schichten mit schichtweise vorgegebenen Konturen ein Formkörper mit vorgegebener Form gebildet ist, wobei jede Belichtung in einem Belichtungsgebiet mit vorgegebener Kontur durch gesteuerte Aktivierung individueller Belichtungselemente aus einem zweidimensionalen Feld von Belichtungselementen erfolgt, wobei jedem Belichtungselement ein Bildelement zugeordnet ist und die belichteten Bildelemente zusammen das Belichtungsgebiet definieren, wobei für jeden Belichtungsschritt einer Schicht eine zweidimensionale Matrix erstellt wird, wobei jedes Element der Matrix einem Belichtungselement aus dem Feld der Belichtungselemente zugeordnet ist und Steuerbefehle für dieses Belichtungselement in Form einer zeitabhängigen Funktion enthält, die den Intensitätsverlauf der Strahlung des Belichtungselements über den Belichtungsschritt individuell festlegt.

Ein Verfahren zum Aufbau eines Formkörpers ist zum Beispiel aus WO 2010/045950 A1 bekannt, die sich insbesondere auf den Aufbau von Dentalrestaurationen aus flüssigen, photopolymerisierbaren Materialien bezieht. Bei dem bekannten Verfahren wird eine Bauplattform vertikal beweglich über einem Wannenboden gehalten, der lichtdurchlässig ausgebildet ist. Unterhalb des Wannenbodens befindet sich eine Belichtungseinheit. Die Bauplattform wird zunächst in das photopolymerisierbare Material soweit abgesenkt, bis zwischen der Bauplattform und dem Wannenboden nur noch eine Schicht mit der gewünschten Schichtdicke aus photopolymerisierbarem Material verbleibt. Anschließend wird diese Schicht mit einer vorgegebenen Kontur durch die Belichtungseinheit belichtet und dadurch ausgehärtet. Nach Anheben der Bauplattform wird photopolymerisierbares Material aus der Umgebung nachgeführt und die Bauplattform erneut abgesenkt, wobei die Absenkung so gesteuert wird, dass der Abstand zwischen der zuletzt gebildeten Schicht und dem Wannenboden eine Schicht mit der gewünschten Dicke definiert. Danach werden die letzten Schritte so oft wiederholt, bis durch die aufeinanderfolgende Aushärtung von Schichten mit jeweils vorgegebener Kontur ein Formkörper mit der gewünschten Form hergestellt ist.

Die Belichtung in einem Belichtungsgebiet mit vorgegebener Kontur erfolgt mit einer Belichtungseinheit mit einem Feld von Belichtungselementen, die selektiv ansteuerbar sind, um ein Belichtungsgebiet mit vorgegebener Kontur zu erzeugen. Die Belichtungseinheit kann z.B. eine Lichtquelle und ein Feld von Mikrospiegeln umfassen, die selektiv ein- und ausschaltbar sind, d.h. Licht in ein zugehöriges Bildelement in dem Belichtungsgebiet reflektieren oder nicht. Eine Einstellung der (mittleren) Intensität eines Belichtungselements kann durch aufeinanderfolgendes Einschalten eines Mikrospiegels mit gewünschter Frequenz und gewünschter Belichtungsimpulsdauer erfolgen, so dass sich eine gewünschte Intensität über den gesamten Belichtungsschritt ergibt. Andere Belichtungseinheiten können eine Lichtquelle und einen ortsselektiven Lichtmodulator (Digital Light Valve), z.B. in Form eines LCD-Feldes, aufweisen, das so ein Feld von Belichtungselementen mit individuell einstellbaren Intensitäten bildet.

Die europäische Patentanmeldung EP 1 894 704 A1 beschäftigt sich mit dem Problem einer verbesserten Auflösung der Formkörper an den Rändern der aufzubauenden Formkörper. Dazu wird unter anderem eine Grauabstufung der am Rande liegenden Bildelemente vorgeschlagen, wobei die Verfahrensweise den aus der Computer-Graphik bekannten Anti-Aliasing-Verfahren entspricht. Um am Rand die Belichtung mit Graustufen durchzuführen, wird z.B. die Belichtungsintensität der Belichtungselemente bei konstanter Belichtungsdauer niedriger eingestellt, wobei die Belichtungsintensität über die Belichtungsdauer konstant ist; alternativ wird, bei gleicher Intensität für alle Bildelemente, die Belichtungsdauer für Bildelemente am Rand gesteuert verkürzt, um eine Graustufeneinstellung zur besseren Definition der Formkörperränder durchzuführen. Entsprechend ist in WO 2008/088642 A2 in ähnlichem Zusammenhang bei der Belichtung von Randbildelementen auch erwähnt, dass zur Erzielung einer Grauabstufung auch die Belichtungszeit für Randbildelemente eingestellt werden kann.

Der mit dem erfindungsgemäßen Verfahren herzustellende Formkörper kann zum Beispiel ein Grünling für eine Dentalrestauration sein, wobei das photopolymerisierbare Material in diesem Fall ein keramikgefülltes Photopolymer (Schlicker) sein kann.

Nach Aufbau des Grünlings durch schichtweise Polymerisation mit gewünschter Kontur erfolgt eine thermische Behandlung des Formkörpers. Der erste Schritt der thermischen Behandlung umfasst die Entfernung des photopolymerisierten Bindermaterials, das sogenannte Entbindern. Sobald die Bindermatrix durch thermische Zersetzung entfernt ist, besteht der Formkörper aus lose gepackten keramischen Pulverteilchen, die durch Kohäsivkräfte zusammengehalten werden. Während des Entbinderns können Defekte entstehen, d.h. es können sich Risse in dem Formkörper bilden. Solche Defekte können das Ergebnis eines nicht-optimierten Temperaturprofils beim Entbindern sein, können aber auch ihren Ursprung bei der Herstellung des Formkörpers durch schichtweise Polymerisation haben. Während des Entbinderns ist die strukturelle Festigkeit des Formteils sehr begrenzt. Beim Entbindern kann der Abbau von internen Spannungen, die während der Herstellung des Formkörpers durch schichtweise Polymerisation aufgebaut worden sind, zu Rissen in der geschwächten Struktur beim Entbindern führen. Innere Spannungen können sich während der Photopolymerisierung des photopolymerisierbaren Schlickers aufbauen. Es hat sich gezeigt, dass während der Photopolymerisierung eine Volumenschrumpfung von etwa 5% auftritt. Ein viskoses Nachströmen von Schlickern kann diese Volumenschrumpfung kompensieren. Wenn jedoch bereits verfestigte Oberflächen den Materialfluss behindern, bauen sich innere Spannungen in der entstehenden, sich verfestigenden Schicht auf. Bei dem herkömmlichen Verfahren bilden der Wannenboden und die feste Oberfläche der zuletzt ausgehärteten Schicht feste Begrenzungsoberflächen, die den Materialnachfluss begrenzen. Ferner begrenzen sich verfestigende Bereiche der Schicht bei der Polymerisation den Nachfluss von weiterem photopolymerisierbarem Material.

Bekannte Vorrichtungen zum Aufbau von Formkörpern durch schichtweise Polymerisation verwenden Belichtungsprotokolle mit konstanten Parametern Belichtungsdauer und -intensität, deren Produkt die Energiedosis ergibt. Es ist bekannt, dass eine minimale Energiedosis nötig ist, um Photopolymerisation zu induzieren. Da keine Abhängigkeit der geometrischen Genauigkeit (Ortsauflösung) oder der Erzeugung von internen Spannungen und Rissen von der Belichtungsdauer und -intensität bekannt war, wurden im Hinblick auf eine kurze Belichtungsdauer Belichtungen mit hohen Intensitäten favorisiert.

Interne Spannungen aufgrund von Polymerisationsschrumpfung sind auf dem Gebiet der photohärtbaren dentalen Kompositmaterialien bekannt. Zurückbleibende inneren Spannungen beinträchtigen die mechanische und chemische Stabilität der daraus hergestellten Dentalrestaurationen. Es hat sich gezeigt, dass verschiedene Aushärtungsarten zu deutlich niedrigeren Polymerisationsspannungen führen können (siehe Nicoleta et al., "Is the soft-start polymerisation concept still relevant", Clinical Oral Investigations, 1(15), Seiten 21 - 29). Die Reduzierung der internen Spannungen wird durch Minimieren der Volumenschrumpfung erreicht, die von einem niedrigeren Konversionsgrad herrührt. In diesem Zusammenhang sind auch Beleuchtungsprotokolle für dentale Kompositmaterialien bekannt, die mit nicht-konstanten Intensitäten arbeiten. Ein Beispiel dafür ist das sogenannte "Soft-Start"-Protokoll, das eine anfängliche Belichtung mit reduzierter Intensität für eine bestimmte Zeitperiode gefolgt von einer Belichtung mit maximaler Intensität beinhaltet. Ein weiteres Protokoll ist das sogenannte "Pulse-Delay"-Härten, bei dem eine Belichtung mit einem Puls mit reduzierter Intensität, eine anschließende Wartezeit ohne Belichtung (Sekunden oder sogar Minuten) und danach eine Belichtung mit maximaler Intensität aufeinanderfolgen.

Aus WO 2012/009630 A1 ist ein Verfahren mit den Merkmalen des Oberbegriffs von Anspruch 1 bekannt.

Aus U.S. 2009/184444 A1 ist ein Verfahren mit den Merkmalen des Oberbegriffs des Patentanspruchs 1 bekannt. Darin ist eine Belichtungseinheit mit einem Intensitätsmodulator (LCD-Element) beschrieben, wobei jedes Bildelement des zweidimensionalen Lichtmodulators mit einem pulsbreitenmodulierten Aktivierungssignal angesteuert wird. Die pulsbreitenmodulierte Belichtung für jedes Belichtungselement impliziert eine zeitabhängige Belichtungsintensität, nämlich Wechsel zwischen maximaler Belichtungsintensität für das Belichtungselement und fehlende Belichtung in den Pulspausen.

Es ist Aufgabe der vorliegenden Erfindung, ein Verfahren zum schichtweisen Aufbau eines Formkörpers aus photopolymerisierbarem Material zu schaffen, mit dem es möglich ist, Defekte an dem fertig gestellten Formkörper, wie innere Spannungen, Risse und geometrische Ungenauigkeiten an den Rändern, reduzieren zu können.

Zur Lösung dieser Aufgabe dient das erfindungsgemäße Verfahren mit dem Merkmalen des Patentanspruchs 1. Vorteilhafte Ausführungsformen der Erfindung sind in den Unteransprüchen aufgeführt.

Bei dem Verfahren ist vorgesehen, dass für jeden Belichtungsschritt einer Schicht eine zweidimensionale Matrix erstellt wird, wobei jedes Element der Matrix einem Belichtungselement aus dem Feld der Belichtungselemente zugeordnet ist und Steuerbefehle für dieses Belichtungselement in Form einer zeitabhängigen Funktion enthält, die den Intensitätsverlauf der Strahlung des Belichtungselements über den Belichtungsschritt individuell festlegt. Dabei ist es möglich, durch die gezielte Einstellung der Intensität örtlich und/oder zeitlich differenziert die Polymerisationskinetik zu beeinflussen, um so Defekte in der polymerisierten Schicht gezielt zu reduzieren. Die zeitabhängigen Funktionen zur Definition des Intensitätsverlaufs können kontinuierliche stetige Funktionen oder Funktionen in Form von Impulsfolgen sein, bei denen die Intensität durch Variation von Impulsdauer und/oder Impulsfrequenz gesteuert wird. Erfindungsgemäß ist vorgesehen, dass, soweit in einem Belichtungsschritt ein allen zeitabhängigen Funktionen der Intensitätsverläufe der zu aktivierenden Belichtungselemente gemeinsamer Anteil der Intensitätsvariation als allgemeine Intensitätsvariation vorhanden ist, diese allgemeine Intensitätsvariation durch Steuerung der Intensität der Lichtquelle nach Maßgabe der allgemeinen Intensitätsvariation erfolgt. Dadurch ist es vorzugsweise möglich, die Intensität der Lichtquelle minimal so einzustellen, dass das am stärksten zu belichtende Bildelement gerade noch die gewünschten Belichtungsintensität erhält. Nimmt die Belichtungsintensität während des Belichtungsschrittes ab, wird die Intensität der Lichtquelle entsprechend abgesenkt. Auf diese Weise ist es möglich, die Lichtquelle zu jedem Zeitpunkt nur mit der minimal benötigten Intensität zu betreiben, was zur Folge hat, dass das sogenannte Dunkelfeld vermindert ist. Das Dunkelfeld setzt sich aus Gebieten mit Bildelementen zusammen, die während eines Belichtungsschritts überhaupt nicht belichtet werden sollen. An sich sollte die Lichtintensität in diesem Dunkelfeld Null sein. Aufgrund von nicht vollständig idealen Eigenschaften der Lichtmodulatoren und der Lichtführung kommt es jedoch dazu, dass während eines Belichtungsschrittes auch in dem Dunkelfeld außerhalb des Belichtungsgebietes noch eine nicht verschwindende Lichtintensität vorhanden ist. Diese Restlichtintensität im Dunkelfeld hängt von der Intensität der zur Beleuchtung verwendeten Lichtquelle ab, wobei die Restlichtintensität des Dunkelfeldes mit steigender Intensität der Lichtquelle ansteigt. Durch Minimierung der eingestellten Intensität der Lichtquelle zeitabhängig über die Belichtungsschritte kann auf diese Weise die unerwünschte Intensität des Dunkelfeldes minimiert werden. Dieses Dunkelfeld ist während des gesamten Bauprozesses wirksam und permanent auch in Gebieten vorhanden, die momentan nicht belichtet werden sollen. Dadurch kann das photopolymerisierbare Material permanent leicht chemisch reagieren und es kommt zu einer zunehmenden Gelierung und Verdickung des flüssigen Ausgangsmaterials.

Mit der vorliegenden Erfindung wird ein Verfahren vorgeschlagen, mit dem durch zeitliche Variation der Lichtquellenhelligkeit, indem diese zu jedem Zeitpunkt auf den minimal möglichen Wert eingestellt wird, die Gesamtdosis an Lichtenergie, die durch das Dunkelfeld auf das Photopolymer einwirkt, verringert werden kann. Dazu wird, soweit die in einem Belichtungsschritt gerade zu belichtenden Bildelemente einen gemeinsamen Anteil eines zeitlich variierenden Intensitätsverlaufs haben, dieser gemeinsame Anteil der Intensitätsvariation nicht durch individuelle Ansteuerung der einzelnen Belichtungselemente gesteuert, sondern durch entsprechende globale Steuerung der Intensität der Lichtquelle. In jedem Fall ergibt sich durch die erfindungsgemäße Vorgehensweise eine Reduzierung der integrierten Intensität der Lichtquelle und damit eine Reduzierung der Effekte des Dunkelfeldes, da bei konstanter Intensität der Lichtquelle diese auf dem Maximalwert betrieben werden muss, der bei den Belichtungen des Bauprozesses vorkommen kann.

In einer bevorzugten Ausführungsform werden in einem Belichtungsschritt in dem für diesen Belichtungsschritt vorgesehenen Belichtungsgebiet eine oder mehrere zusammenhängende zu belichtende Flächen und die diesen zugeordneten zu aktivierenden Belichtungselemente identifiziert. Jede zusammenhängende Fläche wird aus einem Kern- und einem Randgebiet zusammengesetzt, wobei die zeitabhängigen Funktionen der Intensitätsverläufe der Belichtungselemente so gewählt werden, dass diese im Kerngebiet früher gestartet werden als die Belichtungselemente für das Randgebiet.

In einer alternativen Ausführungsform werden wieder in einem Belichtungsschritt in dem für diesen Belichtungsschritt vorgesehenen Belichtungsgebiet eine oder mehrere zusammenhängende zu belichtende Flächen und die diesen zugeordneten zu aktivierenden Belichtungselemente identifiziert. Jede zusammenhängende Fläche wird aus einem Kerngebiet, einem oder mehreren mittleren Gebieten zunehmenden Abstands vom Kerngebiet und einem Randgebiet zusammengesetzt. Die zeitabhängigen Funktionen der Intensitätsverläufe der Belichtungselemente werden so gewählt, dass diese zuerst im Kerngebiet gestartet werden, dann in dem oder den mittleren Bereichen in der Reihenfolge ihres Abstands vom Kerngebiet aufeinanderfolgend gestartet und schließlich die Belichtungselemente im Randgebiet gestartet werden.

Bei den zuvor definierten Verfahrensweisen wird erreicht, dass die Polymerisation in zusammenhängenden Flächen von innen nach außen fortschreitet. Dadurch kann, soweit die fortschreitende Polymerisation im inneren Bereich in der zu belichtenden Fläche dort bereits zu Schrumpfungen geführt hat, photopolymerisierbares Material aus weiter außen liegenden Bereichen nachfließen. Auf diese Weise können die sonst durch die Schrumpfung bei der Polymerisation auftretenden Spannungen in dem Polymerisierten Material reduziert werden.

Dabei werden in bevorzugten Ausführungsformen die zeitabhängigen Funktionen der Intensitätsverläufe der Belichtungselemente so gewählt, dass die Belichtungselemente eines mittleren Gebiets oder des Randgebietes erst gestartet werden, wenn die Belichtungselemente des vorhergehenden, weiter innen liegenden Gebiets wenigstens 50% ihrer integrierten Intensität für den aktuellen Belichtungsschritt abgegeben haben. Insbesondere ist es bevorzugt, dass die zeitabhängigen Funktionen der Intensitätsverläufe der Belichtungselemente so gewählt werden, dass die Belichtungselemente eines mittleren Gebiets oder des Randgebietes erst gestartet werden, wenn die Belichtungselemente des vorhergehenden weiter innen liegenden Gebiets ihre integrierte Intensität für den aktuellen Belichtungsschritt vollständig abgegeben haben.

In einem bevorzugten Verfahren ist vorgesehen, dass die zeitabhängigen Funktionen der Intensitätsverläufe der Belichtungselemente durch Impulsfolgen mit vorgegebenen Impulslängen und Perioden definiert sind und dass in Impulsfolgen für Belichtungselemente für ein Randgebiet die Pulslängen kleiner gewählt werden als diejenigen für Belichtungselemente für weiter innen liegende Gebiete. Im Zusammenhang mit der vorliegenden Erfindung hat sich nämlich gezeigt, dass bei Belichtung mit Impulsfolgen mit kleineren Pulslängen eine bessere Ortsauflösung erzielt wird. Insofern ist es vorteilhaft im Randgebiet, wo eine gute Ortsauflösung zur genauen Konturdefinition des Randes angestrebt wird, Impulsfolgen mit kleineren Pulslängen anzuwenden, während im Kerngebiet oder in einem oder mehreren mittleren Gebieten mit größeren Impulslängen gearbeitet werden kann, was die Belichtungsdauer reduziert.

In einem weiteren bevorzugen Verfahren ist wieder vorgesehen, dass die zeitabhängigen Funktionen der Intensitätsverläufe der Belichtungselemente durch Impulsfolgen mit vorgegebenen Pulslängen und Perioden definiert sind. Ferner ist vorgesehen, dass für die Impulsfolgen für Belichtungselemente aus dem Randgebiet die Perioden größer gewählt werden als diejenigen für Belichtungselemente für weiter innen liegende Gebiete. Im Zusammenhang mit der vorliegenden Erfindung hat sich nämlich auch gezeigt, dass bei Belichtung mit Impulsfolgen bei gegebenen Impulslängen mit größeren Perioden (kleineren Frequenzen) der Impulsfolgen eine höhere Ortsauflösung erzielbar ist, d.h. Licht wird weniger stark aus dem Belichtungsgebiet in Bereiche außerhalb des Belichtungsgebiets gestreut, was eine bessere Konturdefinition des Belichtungsgebiets bedeutet. Aus diesem Grund werden im Randgebiet, wo die bessere Konturdefinition benötigt wird, Impulsfolgen mit längeren Perioden eingesetzt als in weiter innen liegenden Gebieten, wo zur Reduzierung der Belichtungsdauer auch mit kürzeren Perioden (höheren Frequenzen) gearbeitet werden kann.

In einem weiteren bevorzugten Verfahren ist vorgesehen, dass die zeitabhängigen Funktionen der Intensitätsverläufe der Belichtungselemente so gewählt werden, dass sie in einem Belichtungsschritt eine erste Belichtungsphase mit niedriger Belichtungsintensität und danach eine Phase mit hoher Intensität auf einem Maximalwert für eine vorgegebene Periode haben, wobei die zeitabhängigen Funktionen so festgelegt sind, dass die erste Belichtungsphase mit niedriger Intensität wenigstens dreimal so lang wie die vorgegebene Periode auf dem Maximalwert ist. Insbesondere kann vorgesehen sein, dass die zeitabhängigen Funktionen der Intensitätsverläufe in der ersten Belichtungsphase durch Funktionen der Form *I*₀*·e*^{*t*/*τ*} definiert sind, wobei *I₀* eine Konstante und *τ* eine vorgegebene Zeitkonstante ist. Soweit alle momentan zu belichtenden Bildelemente die gleiche Zeitkonstante τ haben, kann die Lichtquelle mit einer zu e^{t/τ} proportionalen Helligkeit betrieben werden.

In einer bevorzugten Ausführungsform ist vorgesehen, dass, wenn mehrere nebeneinanderliegende, durch Zwischenräume getrennte Flächen im Belichtungsgebiet zu belichten sind, die Belichtungselemente von direkt benachbarten Flächen zeitlich so gesteuert werden, dass die Belichtung direkt benachbarte Flächen zeitlich versetzt zueinander erfolgt. Dadurch kann die Ortsauflösung und Randdefinition der Flächen aus folgendem Grund verbessert werden: Durch Streuung tritt auch Licht in die Zwischenräume benachbarter Flächen. Wenn beide Flächen gleichzeitig belichtet werden, summiert sich das Streulicht aus beiden Flächen im Zwischenraum und die Intensität kann die Schwelle zur Polymerisation überschreiten. Dadurch kann es zu unbeabsichtigter Polymerisation im Zwischenraum. Werden die benachbarten Flächen nacheinander belichtet, tritt jeweils nur Streulicht aus einer der benachbarten Flächen in den Zwischenraum. Dadurch verlängert sich zwar die Dauer des Eintritts von Streulicht in den Zwischenraum, es halbiert sich aber dessen Intensität, die dadurch unter der Schwellenintensität für Polymerisation bleiben kann, so dass keine Polymerisation im Zwischenraum auftritt.

Es kann auch vorgesehen sein, dass, wenn mehrere nebeneinanderliegende, voneinander getrennte Flächen im Belichtungsgebiet zu belichten sind, die unterschiedlichen Größen haben, die Flächen mit unterschiedlichen, von ihrer Größe abhängigen Intensitätsverläufen belichtet werden.

Die Erfindung wird im Folgenden anhand von Ausführungsbeispielen in Verbindung mit den Zeichnungen beschrieben, in denen:
Fig. 1 eine schematische Darstellung von Teilen einer Vorrichtung zum Aufbau eines Formkörpers mit einem Verfahren nach der vorliegenden Erfindung zeit,
Fig. 2 einen Ausschnitt eines zweidimensionalen Lichtintensitätsmodulators mit einigen aktivierten Belichtungselementen, wobei schematisch angedeutet ist, dass zwei Typen von aktivierten Belichtungselementen mit unterschiedlichen Intensitätsverläufen betrieben werden,
Fig. 3 eine schematische Darstellung eines Belichtungsgebiets und dessen Aufteilung in ein Kerngebiet, ein mittleres Gebiet und ein Randgebiet zeigt,
Fig. 4 den zeitlichen Verlauf der Intensitäten der Belichtungselemente aus dem Kerngebiet, dem mittleren Gebiet und dem Randgebiet aus Fig. 1 zeigt,
Fig. 5 eine schematische Darstellung des zeitlichen Ablaufs aufeinanderfolgender Belichtungsphasen, in denen das Kerngebiet, dass mittlere Gebiet und das Randgebiet mit unterschiedlicher zeitlicher Abfolge belichtet werden,
Fig. 6 ein Maß für die Ortsauflösung (Übergröße in %) als Funktion der Impulsdauer für zwei Intensitäten 0,14 mW/mm² und 0,3 mW/mm²) zeigt,
Fig. 7 ein Maß für die Ortsauflösung (Übergröße in %) als Funktion der Impulsfrequenz für zwei feste Impulslängen (0,01 s und 0,1 s) zeigt,
Fig. 8 drei verschiedene zeitliche Verläufe der Belichtungsintensität mit langsamem Anstieg auf einen Maximalwert zeigt, und
Fig. 9 die Lichtintensität des Dunkelfeldes als Funktion der Helligkeit der Lichtquelle zeigt.

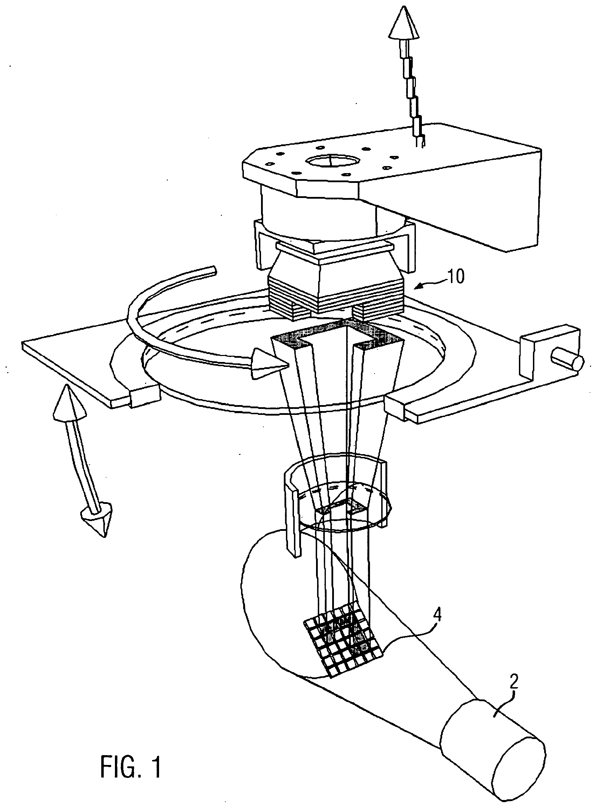

Fig. 1 zeigt Teile einer Vorrichtung zum Aufbau eines Formkörpers, die zur Durchführung eines Verfahrens gemäß der vorliegenden Erfindung verwendet werden kann. Im Zusammenhang mit den Versuchen zu der vorliegenden Erfindung wurde eine Belichtungseinheit mit einer Lichtquelle 2 (460 nm Wellenlänge), einem von der Lichtquelle beleuchteten zweidimensionalen Lichtintensitätsmodulator 4 in Form eines DLP-Chips (Digital Light Processing) und einer programmierbaren Steuereinheit (nicht gezeigt) verwendet. Das Kernstück der Belichtungseinheit ist der DLP-Chip. Dieser besteht aus rasterförmig angeordneten Mikrospiegelaktoren, d.h. verkippbaren spiegelnden Flächen, wobei in Fig. 1 aus Gründen der Darstellbarkeit nur 6x6 Mikrospiegel angedeutet sind. Die Bewegung der Mikrospiegel wird durch elektrostatische Felder hervorgerufen. Die von der Lichtquelle beleuchteten Mikrospiegel stellen hier die Belichtungselemente dar. Jedem Belichtungselement ist ein Bildelement (Pixel) in dem Belichtungsgebiet zugeordnet. Jeder Mikrospiegel lässt sich in seinem Winkel einzeln verstellen und besitzt in der Regel zwei stabile Endzustände, nämlich eine aktive Stellung, in der er Licht von der Lichtquelle in das dem Belichtungselement zugeordnete Bildelement in dem Belichtungsgebiet reflektiert, und eine deaktivierte Stellung, in der durch den weggeschwenkten Mikrospiegel kein Licht in das Belichtungsgebiet reflektiert wird. In Fig. 1 sind die deaktivierten Mikrospiegel weiß und die aktivierten gepunktet dargestellt. Zwischen diesen Stellungen können die Mikrospiegel typischerweise mit Frequenzen bis zu 5 kHz unter Steuerung der Steuereinheit hin und her geschaltet werden. Bei Mikrospiegelanordnungen kann die Intensität in jedem Bildelement durch Ansteuerung des Mikrospiegels mit einer Impulsfolge erfolgen, wobei die Impulsfolge einer Pulsbreitenmodulation zur Einstellung der Intensität unterzogen wird; die maximale Intensität wird erreicht, wenn der Mikrospiegel über den ganzen Belichtungsschritt kontinuierlich in der aktiven Stellung eingestellt ist. Grundsätzlich können aber auch andere Belichtungseinheiten als Mikrospiegelanordnungen verwendet werden, die zum Beispiel sogenannte "Digital Light Valves" verwenden.

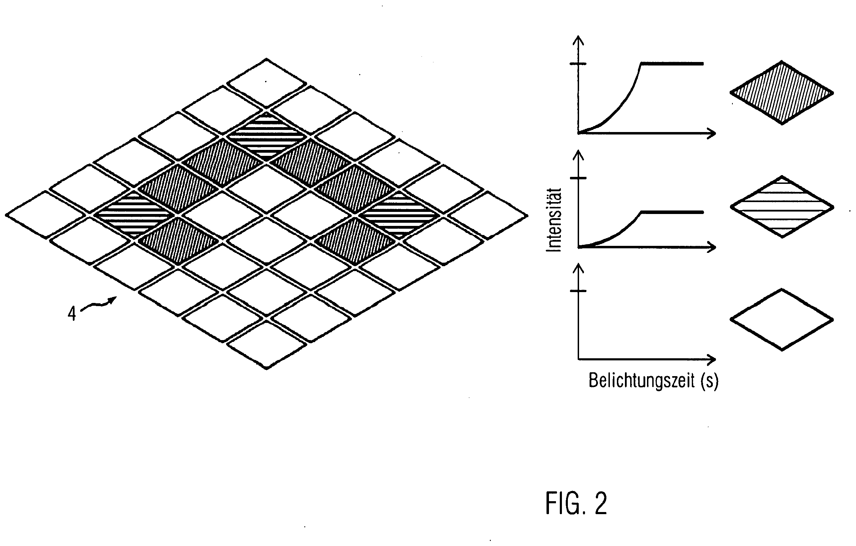

Mit der in Fig. 1 schematisch in Teilen dargestellten Vorrichtung wird ein Formkörper 10 durch sukzessives Belichten von Schichten mit vorgegebener Kontur an einer Bauplattform aufgebaut, die an einem in Höhenrichtung verstellbaren Träger aufgehängt ist. Durch Absenken der Bauplattform in eine Wanne mit durchsichtigem Boden, wird zwischen der zuletzt an dem Formkörper 10 gebildeten untersten Schicht und dem Wannenboden eine Schicht aus noch unausgehärtetem, photopolymerisierbarem Material definiert, das sich in der Wanne befindet. Durch Einstellung des Abstands zwischen der Unterseite der zuletzt gebildeten Schicht an dem Formkörper 10 und dem Wannenboden kann die gewünschte Schichtdicke definiert werden. Die so definierte Schicht wird dann mit der gewünschten Kontur durch Belichtung von unten ausgehärtet. In der in Fig. 1 schematisch angedeuteten Situation soll eine Fläche belichtet werden, die die Form des Randes eines Quadrates hat, wobei eine Ecke des Quadrats abgeschnitten ist. Dieses Belichtungsgebiet wird durch gesteuerte Aktivierung einzelner Belichtungselemente in dem Lichtintensitätsmodulator 4 durchgeführt. In Fig. 2 ist schematisch wiederum der Ausschnitt von 6x6 Belichtungselementen aus dem Lichtintensitätsmodulator gezeigt. Hier sind die in dem gegenwärtigen Belichtungsschritt aktivierten Belichtungselemente durch Schraffur dargestellt. Dabei sind zwei Arten von Schraffuren gezeigt, wobei die unterschiedlich schraffierten Belichtungselemente Belichtungen mit unterschiedlichen Intensitätsverläufen durchführen, wie rechts in Fig. 2 angedeutet. Bei Ausführung des Lichtintensitätsmodulators durch eine Mikrospiegelanordnung wird der Intensitätsverlauf durch eine Impulsfolge von Aktivierungen der Mikrospiegel realisiert, wobei die Impulsfolgen pulsbreitenmoduliert sind, um den gewünschten mittleren Intensitätsverlauf zu erreichen. Die maximale Belichtungsintensität eines Belichtungselements wird erreicht, wenn der Mikrospiegel über die ganze Belichtungszeit des Belichtungsschrittes aktiviert ist. Daneben kann eine allen Belichtungselementen gemeinsame Variation der Belichtungsintensität durch Variation der Leuchtintensität der Lichtquelle 2 erreicht werden.

Gemäß der vorliegenden Erfindung ist für jeden Belichtungsschritt einer Fläche des aufzubauenden Formkörpers eine Matrix vorgesehen, wobei jedem Element der Matrix ein Belichtungselement (z.B. ein Mikrospiegel) zugeordnet ist. In Fig. 2 ist ein Feld von 6x6 Mikrospiegeln dargestellt, denen eine 6x6 Matrix zuzuordnen wäre. Jedes Element der Matrix enthält eine zeitabhängige Funktion, die den zeitlichen Verlauf der Belichtungsintensität für dieses Belichtungselement vorgibt. Grundsätzlich kann dieser Intensitätsverlauf für jedes Belichtungselement individuell vorgegeben sein.

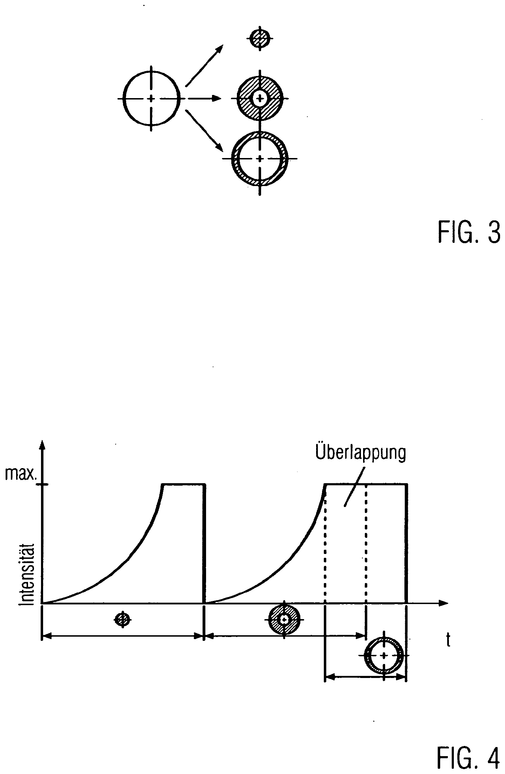

Es können jedoch auch Teilgebiete des Belichtungsgebietes definiert werden, und die jeweils einem Teilgebiet zugeordneten Belichtungselemente zu einem gemeinsamen zeitlichen Intensitätsverlauf zusammengefasst werden. Nach einer Ausführungsform der Erfindung werden in dem Belichtungsgebiet eines Belichtungsschrittes zusammenhängende zu belichtende Flächen identifiziert. Als zusammenhängende Flächen werden hier insbesondere im topologischen Sinne einfach zusammenhängende Flächen verstanden, d.h. jede geschlossenen Kurve in der einfach zusammenhängenden Fläche umschließt ausschließlich Gebiete die zu der zusammenhängenden Fläche gehören. Eine solche zusammenhängende zu belichtende Fläche wird zumindest aus einem Kerngebiet und einem Randgebiet zusammengesetzt. In dem in Fig. 3 gezeigten Beispiel ist links eine zusammenhängende zu belichtende Fläche gezeigt, hier in Form einer Kreisfläche. Diese zusammenhängende Fläche wird in dem Beispiel aus Fig. 3 aus einem Kerngebiet, einem mittleren Gebiet um das Kerngebiet und einem Randgebiet zusammengesetzt, die in Fig. 3 rechts dargestellt sind.

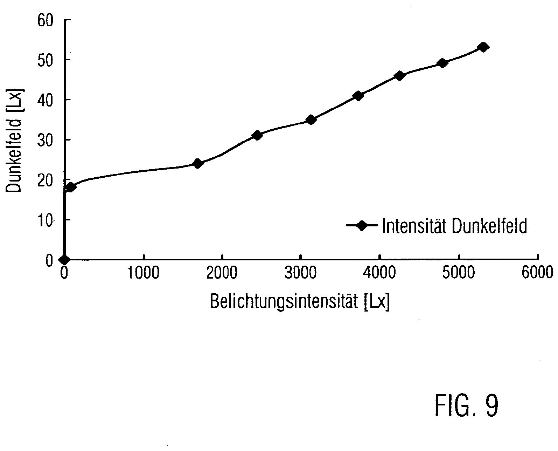

In Fig. 4 sind schematisch die Intensitätsverläufe gezeigt, die für die dem Kerngebiet, dem mittleren Gebiet und dem Randgebiet zugeordneten Belichtungselemente vorgesehen sind. In diesem Beispiel hat der Intensitätsverlauf für die dem Kerngebiet zugeordneten Belichtungselemente zunächst einen ansteigenden Verlauf bis zu einem Maximalwert und anschließend eine Phase mit konstanter Belichtungsintensität. In diesem Fall haben dem Kerngebiet zugeordneten Belichtungselemente einen gemeinsamen Intensitätsverlauf, nämlich einen Anstieg von 0 auf einen Maximalwert, anschließend eine Phase mit konstanter Intensität und schließlich Abfall auf Intensität 0. Dieser gemeinsame Intensitätsverlauf der dem Kerngebiet zugeordneten Belichtungselemente wird durch Steuerung der Lichtquelle mit einem entsprechenden Intensitätsverlauf realisiert. Nach Abschluss der Belichtung des Kerngebietes werden die dem mittleren Gebiet zugeordneten Belichtungselemente mit einem langsam ansteigenden Intensitätsverlauf gestartet, der wiederum bis zu einer maximalen Intensität führt und dann für eine vorgegebene Phase bei der maximalen Intensität verbleibt und danach auf Null abfällt. Bereits bei Erreichen der maximalen Intensität für die Belichtungselemente des mittleren Gebietes werden die dem Randgebiet zugeordneten Belichtungselemente mit maximaler Intensität gestartet und verbleiben nach Abschluss der Belichtung für das mittlere Gebiet noch einmal etwa für die gleiche Zeit auf maximaler Intensität. Auch bei der Belichtung des mittleren Gebiets und des Randgebiets treten gemeinsame Anteile des Intensitätsverlaufs auf, zum Beispiel der Anstieg zu Beginn der Belichtung des mittleren Gebiets. Dieser gemeinsame Intensitätsverlauf, der von allen zu aktivierenden Belichtungselementen zu durchlaufen ist, wird durch Steuerung der Lichtquelle mit einem diesem Verlauf entsprechenden Intensitätsprofil realisiert. Auf diese Weise ist es möglich, die Lichtquelle auf die minimal notwendige Intensität zeitabhängig einzustellen, so dass die über den Belichtungsschritt integrierte Dosis minimal ist. Damit ist auch die über jeden Belichtungsschritt eingestrahlte Dosis des Dunkelfeldes minimal. Dies lässt sich anhand von Fig. 9 verdeutlichen, in der die Intensität des Dunkelfeldes als Funktion der Intensität der Lichtquelle dargestellt ist. Wie zu erkennen ist, steigt die Intensität des Dunkelfeldes mit wachsender Intensität der Lichtquelle an. Indem nach der vorliegenden Erfindung die Lichtquelle zur Steuerung gemeinsamer Intensitätsvariationen der Belichtungselemente über den Belichtungsschritt verwendet wird, ist die integrierte Dosis im Dunkelfeld verringert, da zeitabhängig mit geringeren Intensitäten der Lichtquelle gearbeitet wird, was gegenüber der Situation einer konstanten Intensität der Lichtquelle auf dem maximal in dem Belichtungsschritt benötigten Wert eine Verringerung der integrierten Dosis im Dunkelfeld zur Folge hat.

Durch die zeitlich gesteuerte Abfolge der Belichtung schreitet die Polymerisation von innen nach außen in den zu belichteten Gebiet fort. Dadurch ist es möglich, dass bei der Polymerisation eines innen liegenden Gebiets möglicherweise auftretende Schrumpfungen noch dadurch kompensiert werden, dass aus einem weiter außen liegenden Gebiet, in dem mangels Belichtung noch keine Polymerisation eingesetzt hat, flüssiges photopolymerisierbares Material nach innen nachfließt.

In Fig. 4 ist ferner zu sehen, dass für das Randgebiet eine insgesamt kürzere Belichtungsdauer als für das Kerngebiet und das mittlere Gebiet vorgesehen ist. Der Grund hierfür liegt darin, dass sich im Zusammenhang mit der vorliegenden Erfindung gezeigt hat, dass mit steigender Belichtungsdauer zunehmend Licht auch in Gebiete außerhalb der eigentlichen Belichtungskontur gestreut wird, d.h. die polymerisierte Schicht wächst über den eigentlich vorgesehenen äußeren Rand hinaus, was eine schlechte Ortsauflösung in Form einer schlechten Definition des Randes der ausgehärteten Schicht bedeutet. Aus diesem Grund wird für das Randgebiet eine möglichst kurze Belichtung mit maximaler Intensität vorgenommen, so dass die Polymerisation des Randgebietes auf eine gute Ortsauflösung hin optimiert ist.

Die in Fig. 4 gezeigten längeren Belichtungsdauern für das Kerngebiet und das mittlere Gebiet mit einem langsamen Anstieg auf die maximale Belichtungsintensität ist, wie weiter unten noch diskutiert wird, daraufhin optimiert, möglichst geringe innere Spannungen in dem polymerisierten Material zu erzeugen.

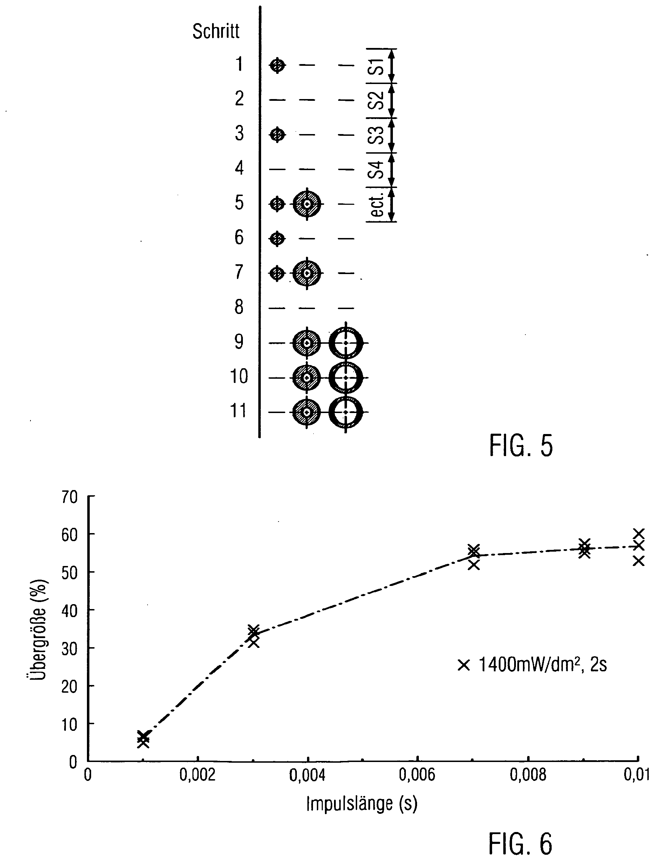

Fig. 5 zeigt eine alternative zeitliche Ablaufsteuerung der Belichtungen des Kerngebiets, des mittleren Gebiets und des Rangebiets. Es wird in Schritt 1 und Schritt 3 zunächst mit einer langsamen Belichtung des Kerngebiets begonnen. In den Schritten 5-7 wird das Kerngebiet mit höherer Intensität belichtet als in Schritt 1-3. In Schritt 5 beginnt aber auch eine erste Belichtung des mittleren Gebiets, auf die eine weitere Belichtung in Schritt 7 erfolgt. In den Schritten 9-11 folgen dann die Belichtungen für das mittlere Gebiet in kürzerer Folge als in Schritten 5-8. Parallel dazu wird in den Schritten 9-11 das Randgebiet belichtet. Im Unterschied zu der in Fig. 4 gezeigten zeitlichen Abfolge der Belichtungen von Kerngebiet, mittlerem Gebiet und Randgebiet sind die Belichtungen in Fig. 5 in den Gebieten teilweise überlappend, d.h. die Belichtung des mittleren Gebiets startet bereits in Schritt 5 zu einem Zeitpunkt, zu dem die Belichtung des Kerngebietes noch nicht ganz abgeschlossen ist, die erst in Schritt 7 endet. Ebenso erfolgt das Ende der Belichtung des mittleren Gebietes in den Schritten 9-11 parallel zur Belichtung des Randgebietes. Insgesamt ist die Belichtungsdauer für das Randgebiet aber wieder kürzer als die für das Kerngebiet und das mittlere Gebiet, um die Genauigkeit der Randdefinition zu erhöhen.

Einflussgrößen auf die Ortsgenauigkeit der durch die Belichtung erzeugten polymerisierten Flächen wurden in folgender Weise untersucht. Es wurde jeweils eine einzelne Schicht von etwa 60 *µ*m Dicke polymerisiert, wobei die Schicht eine regelmäßige Anordnung von quadratischen "Löchern" mit Abmessungen von 200 *µ*m x 200 *µ*m enthielt. Mit anderen Worten wurde sozusagen ein Sieb mit einer regelmäßigen Anordnung von Sieböffnungen aus Quadraten mit Seitenlängen von 200 *µ*m gebildet. Die unter verschiedenen Bedingungen gebildeten Siebschichten wurden anschließend mit einem optischen Mikroskop untersucht und dabei analysiert, inwieweit die Sieböffnungen (im Idealfall 200 *µ*m x 200 *µ*m) durch ungenaue Randdefinition (schlechte Ortsauflösung) verändert waren, d.h. inwieweit die Ränder der die Sieböffnung umgebenden polymerisierten Bereiche in die Sieböffnung hineingewachsen sind. Der Grad des Hineinwachsens wurde als Übergröße gemessen, die den Prozentsatz angibt, um den die aufgrund schlechter Randdefinition in die Sieböffnung hereinwachsenden Ränder die Fläche der Sieböffnung reduzieren. Eine Übergröße von 0% bedeutet eine ideale Ortsdefinition, d.h. die Sieböffnung entspricht genau der vorgegebenen Geometrie von 200 *µ*m x 200 *µ*m, eine Übergröße von 50% bedeutet, dass die Sieböffnungsfläche aufgrund hereinwachsender Ränder auf die Hälfte reduziert ist, der Extremfall einer Übergröße von 100% würde bedeuten, dass die Ortsauflösung so schlecht ist, dass die Sieböffnung vollständig verschwunden ist.

Es wurden nun Siebschichten mit Impulsfolgen mit fester Frequenz (100 Hz) und variabler Impulsdauer untersucht. Die Ergebnisse sind in Fig. 6 dargestellt, worin die Übergröße als Funktion der Impulsdauer für zwei Intensitäten gezeigt ist. Die Impulsdauer wurde dabei von 0,001 s bis 0,01 s variiert, wobei eine Belichtung der maximalen Impulsdauer von 0,01 s bei einer Frequenz von 100 Hz eine kontinuierliche Belichtung bedeutet. Es ist zu erkennen, dass die Übergröße bei kleineren Impulsdauern abnimmt, d.h. die Ortsauflösung ist für möglichst kleine Impulsdauern optimal. Grundsätzlich ist es auch möglich, die Impulse durch schnelles Ein- und Ausschalten der Lichtquelle zu erzeugen, was gegenüber einer Lichtquelle im Dauerbetrieb eine Verringerung der mittleren oder integrierten Dosis im Dunkelfeld zur Folge hat.

Demnach ist es gemäß der vorliegenden Erfindung bevorzugt, bei Belichtung mit Impulsfolgen die Belichtung im Randgebiet mit Impulslängen geringerer Dauer vorzunehmen als in dem Kerngebiet oder einem mittleren Gebiet, um so im Randgebiet, wo zur Definition des Randes eine hohe Ortsauflösung benötigt wird, eine hohe Genauigkeit zu erzielen, während im Kerngebiet und im mittleren Gebiet mit höheren Impulslängen gearbeitet werden kann, da die Auflösung hier keine Rolle spielt.

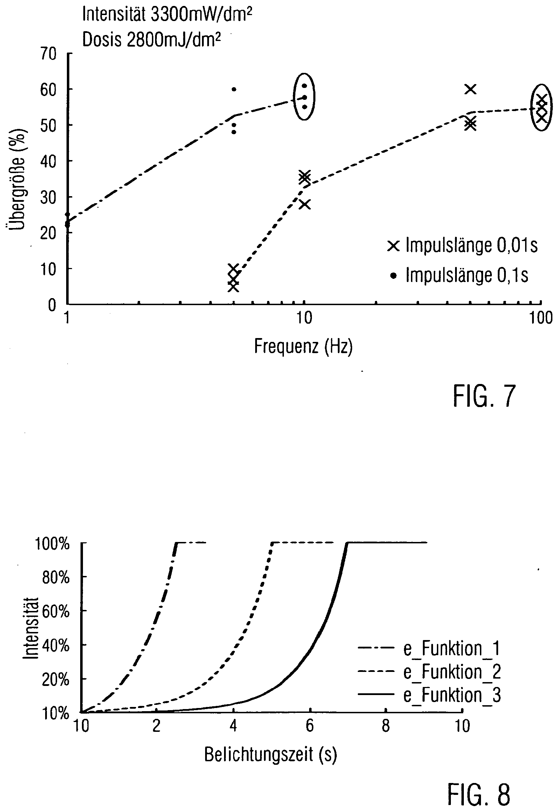

Weiterhin wurde die Abhängigkeit der Ortsauflösung bei Belichtung mit Impulsfolgen mit fester Impulsdauer in Abhängigkeit von der Impulsfrequenz untersucht. In Fig. 7 ist die Ortsauflösung in Form der Übergröße in Prozent als Funktion der Impulsfrequenz für zwei feste Impulsdauern, nämlich 0,1 s und 0,01 s dargestellt. Darin zeigt sich, dass die Ortsauflösung sich zu geringeren Frequenzen hin verbessert (geringere Übergröße). Beim Vergleich der Ergebnisse der beiden Impulsdauern bestätigt sich das Ergebnis aus Fig. 6, wonach geringe Impulsdauern eine bessere Ortsauflösung ergeben.

Daher ist es gemäß der vorliegenden Erfindung bevorzugt, bei Belichtung mit Impulsfolgen die Belichtung im Randgebiet mit möglichst kurzer Pulsdauer durchzuführen, jedenfalls mit geringerer Pulsdauer als für die Belichtungen in einem mittleren oder im Kerngebiet.

Fig. 7 zeigt sehr deutlich, in welchem Maße sich die Ortsauflösung durch Verringerung der Frequenz bei fester Impulslänge verbessern lässt. Zum Beispiel entspricht die Ortsauflösung für eine Impulsfolge mit einer Impulsdauer 0,01 s bei der Frequenz 50 Hz einer Übergröße von 50%, d.h. die Ränder der Sieböffnungen, die eigentlich 200 *µ*m x 200 *µ*m betragen sollten, sind so schlecht definiert, dass die Sieböffnungen zur Hälfte geschlossen sind. Bei gleicher Impulsdauer lässt sich beim Übergang zu einer niedrigeren Frequenz von 5 Hz die Ortsauflösung so erheblich verbessern, dass die Übergröße nur noch etwa 5% beträgt.

Es wurden weitere Versuche durchgeführt, wie sich die inneren Spannungen in den aufgebauten Formkörper und damit die Risse in den gesinterten Bauteilen nach Entbindern reduzieren lassen. Es wurden dabei verschieden lange Belichtungszeiten verwendet. In Fig. 6 sind drei Beispiele für einen Intensitätsverlauf gezeigt, der zunächst einen Anstieg nach einer e-Funktion auf 100% und dann eine kürzere folgende Phase mit konstanter Intensität haben. Die in Fig. 8 dargestellten Intensitätsverläufe beinhalten e-Funktionen mit drei verschiedenen Zeitkonstanten. Beim Vergleich der endgültigen Sinterkörper zeigte sich, dass umso weniger Risse vorhanden sind, je größer die Zeitkonstante der e-Funktion beim Start der Belichtung ist.

Dieses Ergebnis bestätigte sich auch beim Starten der Belichtung auf einem relativ niedrigen konstanten Niveau gefolgt von einer Phase mit maximaler Intensität. Hier zeigt sich, dass eine längere Belichtung zu Beginn auf relativ niedrigem konstantem Niveau im Vergleich zur Phase der Belichtung mit Maximalniveau zu einer Reduzierung von Rissen in dem endgültigen Produkt führt.

## Patentansprüche

1. Verfahren zum Aufbau eines Formkörpers (10) aus photopolymerisierbarem Material unter Anwendung einer lithographiebasierten generativen Fertigung (Rapid Prototyping), bei dem an einer Bauplattform eine Schicht aus flüssigem, photopolymerisierbarem Material definiert wird, die Schicht in einem Belichtungsschritt von einer Belichtungseinheit in einem Belichtungsgebiet mit vorgegebener Kontur polymerisiert wird, eine weitere Schicht aus photopolymerisierbarem Material definiert wird, die zuletzt definierte Schicht in einem weiteren Belichtungsschritt in einem Belichtungsgebiet mit für die zuletzt definierte Schicht vorgegebener Kontur polymerisiert wird, und die letzten beiden Schritte wiederholt werden, bis durch die Abfolge von ausgehärteten Schichten mit schichtweise vorgegebenen Konturen ein Formkörper mit vorgegebener Form gebildet ist, wobei jede Belichtung in einem Belichtungsgebiet mit vorgegebener Kontur durch gesteuerte Aktivierung individueller Belichtungselemente aus einem zweidimensionalen Feld von Belichtungselementen erfolgt, wobei jedem Belichtungselement ein Bildelement zugeordnet ist und die belichteten Bildelemente zusammen das Belichtungsgebiet definieren, wobei die Belichtung des Belichtungsgebiets durch eine gemeinsame Lichtquelle und einen von der Lichtquelle (2) beleuchteten zweidimensionalen Lichtintensitätsmodulator (4) mit einem Raster von individuell steuerbaren Intensitätsmodulatoren erfolgt, so dass jeder beleuchtete Intensitätsmodulator ein Belichtungselement bildet, das ein Bildelement im Belichtungsgebiet belichtet, wobei für jeden Belichtungsschritt einer Schicht eine zweidimensionale Matrix erstellt wird, wobei jedes Element der Matrix einem Belichtungselement aus dem Feld der Belichtungselemente zugeordnet ist und Steuerbefehle für dieses Belichtungselement in Form einer zeitabhängigen Funktion enthält, die den Intensitätsverlauf der Strahlung des Belichtungselements über den Belichtungsschritt individuell festlegt, **dadurch gekennzeichnet, dass**, soweit in einem Belichtungsschritt ein allen zeitabhängigen Funktionen der Intensitätsverläufe der zu aktivierenden Belichtungselemente gemeinsamer Anteil der Intensitätsvariation als allgemeine Intensitätsvariation vorhanden ist, diese allgemeine Intensitätsvariation durch Steuerung der Intensität der Lichtquelle (2) nach Maßgabe der allgemeinen Intensitätsvariation erfolgt.

2. Verfahren nach Anspruch 1, **dadurch gekennzeichnet, dass** die Intensität der Lichtquelle (2) im Verlaufe des Belichtungsschritts so gesteuert wird, dass die Intensität der Lichtquelle zu jedem Zeitpunkt nach Maßgabe der zeitabhängigen Funktionen auf den niedrigsten Wert eingestellt wird, der noch ausreicht, um die momentan am stärksten zu belichtenden Bildelemente noch mit der für sie benötigten Intensität zu versorgen.

3. Verfahren nach Anspruch 1 oder 2, **dadurch gekennzeichnet, dass** in einem Belichtungsschritt in dem aktuellen Belichtungsgebiet eine oder mehrere zusammenhängende zu belichtende Flächen und die diesen zugeordneten zu aktivierenden Belichtungselemente identifiziert und jede zusammenhängende Fläche aus einem Kern- und einem Randgebiet zusammengesetzt wird, wobei die zeitabhängigen Funktionen der Intensitätsverläufe der Belichtungselemente so gewählt werden, dass diese im Kerngebiet früher gestartet werden als die Belichtungselemente im Randgebiet.

4. Verfahren nach Anspruch 1 oder 2, **dadurch gekennzeichnet, dass** in einem Belichtungsschritt in dem aktuellen Belichtungsgebiet eine oder mehrere zusammenhängende zu belichtende Flächen und die diesen zugeordneten zu aktivierenden Belichtungselemente identifiziert und dass jede zusammenhängende Fläche aus einem Kerngebiet, einem oder mehreren mittleren Gebieten zunehmenden Abstands vom Kerngebiet und einem Randgebiet zusammengesetzt wird und dass die zeitabhängigen Funktionen der Intensitätsverläufe der Belichtungselemente so gewählt werden, dass diese zuerst im Kerngebiet gestartet werden, dann in dem oder den mittleren Bereichen in der Reihenfolge ihres Abstands vom Kerngebiet aufeinanderfolgend gestartet werden, und schließlich die Belichtungselemente im Randgebiet gestartet werden.

5. Verfahren nach Anspruch 3 oder 4, **dadurch gekennzeichnet, dass** die zeitabhängigen Funktionen der Intensitätsverläufe der Belichtungselemente so gewählt werden, dass die Belichtungselemente eines mittleren Gebiets oder des Randgebietes erst gestartet werden, wenn die Belichtungselemente des vorhergehenden, weiter innen liegenden Gebiets wenigstens 50% ihrer integrierten Intensität für den aktuellen Belichtungsschritt abgegeben haben.

6. Verfahren nach Anspruch 5, **dadurch gekennzeichnet, dass** die zeitabhängigen Funktionen der Intensitätsverläufe der Belichtungselemente so gewählt werden, dass die Belichtungselemente eines mittleren Gebiets oder des Randgebietes erst gestartet werden, wenn die Belichtungselemente des vorhergehenden, weiter innen liegenden Gebiets ihre integrierte Intensität für den aktuellen Belichtungsschritt vollständig abgegeben haben.

7. Verfahren nach einem der Ansprüche 3 bis 6, **dadurch gekennzeichnet, dass** die zeitabhängigen Funktionen der Intensitätsverläufe der Belichtungselemente so gewählt sind, dass in einem Belichtungsschritt die integrierte Belichtungsdauer im Randgebiet kürzer als in den weiter innen liegenden Gebieten ist.

8. Verfahren nach einem der Ansprüche 3 bis 7, **dadurch gekennzeichnet, dass** die zeitabhängigen Funktionen der Intensitätsverläufe der Belichtungselemente durch Impulsfolgen mit vorgegebenen Impulslängen und Perioden definiert sind und dass für die Impulsfolgen für Belichtungselemente für das Randgebiet die Pulslängen kleiner gewählt werden als diejenigen für Belichtungselemente für weiter innen liegende Gebiete.

9. Verfahren nach einem der Ansprüche 3 oder 8, **dadurch gekennzeichnet, dass** die zeitabhängigen Funktionen der Intensitätsverläufe der Belichtungselemente durch Impulsfolgen mit vorgegebenen Impulslängen und Perioden definiert sind und dass für die Impulsfolgen für Belichtungselemente für das Randgebiet die Perioden größer gewählt werden als diejenigen für Belichtungselemente für weiter innen liegende Gebiete.

10. Verfahren nach einem der vorhergehenden Ansprüche, **dadurch gekennzeichnet, dass** die zeitabhängigen Funktionen der Intensitätsverläufe der Belichtungselemente so gewählt werden, dass sie in einem Belichtungsschritt eine erste Belichtungsphase mit niedriger Belichtungsintensität und danach eine Phase mit hoher Intensität auf einem Maximalwert für eine vorgegebene Periode haben, wobei die zeitabhängigen Funktionen so festgelegt sind, dass die erste Belichtungsphase mit niedriger Intensität wenigstens dreimal so lang wie die vorgegebene Periode auf dem Maximalwert ist.

11. Verfahren nach Anspruch 10, **dadurch gekennzeichnet, dass** die zeitabhängigen Funktionen der Intensitätsverläufe in der ersten Belichtungsphase durch Funktionen der Form *I*_{0·}*e*^{*t*/*τ*} definiert sind, wobei *I₀* eine Konstante und r eine vorgegebene Zeitkonstante ist.

12. Verfahren nach einem der vorhergehenden Ansprüche, **dadurch gekennzeichnet, dass**, wenn mehrere nebeneinanderliegende, durch Zwischenräume getrennte Flächen im Belichtungsgebiet zu belichten sind, die Belichtungselemente von direkt benachbarten Flächen zeitlich so gesteuert werden, dass die Belichtung direkt benachbarte Flächen zeitlich versetzt zueinander erfolgt.

## Claims

1. A method for the construction of a shaped body (10) from photopolymerizable material by using lithography-based generative production (rapid prototyping), in which a layer of liquid photopolymerizable material is defined on a production platform, the layer is polymerized in an exposure region having a predetermined contour by an exposure unit in an exposure step, a further layer of photopolymerizable material is defined, the layer defined last is polymerized in a further exposure step in an exposure region having a predetermined contour for the layer defined last, and the latter two steps are repeated until a shaped body having a predetermined shape has been formed by the sequence of cured layers with contours predetermined layer by layer, each exposure in an exposure region having a predetermined contour being carried out by controlled activation of individual exposure elements in a two-dimensional array of exposure elements, each exposure element being assigned an image element and the exposed image elements together defining the exposure region, wherein the exposure of the exposure region is carried out by a common light source and by a two-dimensional light intensity modulator (4) which is illuminated by the light source (2) and which has a grid of individually controllable intensity modulators, in such a way that each illuminated intensity modulator forms an exposure element that exposes an image element in the exposure region, wherein a two-dimensional matrix is compiled for each exposure step of a layer, each element of the matrix being assigned to an exposure element in the array of exposure elements and control instructions for this exposure element being obtained in the form of a time-dependent function which individually establishes the intensity profile of the radiation of the exposure element over the exposure step, **characterized in that**, if a component of the intensity variation common to all time-dependent functions of the intensity profiles of all exposure elements to be activated exists as a general intensity variation in an exposure step, this general intensity variation is carried out by controlling the intensity of the light source (2) in accordance with the general intensity variation.

2. The method as claimed in claim 1, wherein the intensity of the light source (2) is controlled over the course of the exposure step such that the intensity of the light source is set at each point in time in dependence of the time-dependent functions to the lowest possible value which is just sufficient to provide the image elements which currently have to be exposed with highest intensity only just with the intensity needed for them.

3. The method as claimed in claim 1 or 2, wherein during an exposure step, one or more continuous areas to be exposed in the current exposure region and the exposure elements assigned to them, which are to be activated, are identified and each continuous area is composed of a core region and an edge region, the time-dependent functions of the intensity profiles of the exposure elements being selected in such a way that they are started earlier in the core region than the exposure elements in the edge region.

4. The method as claimed in claim 1 or 2, wherein during an exposure step, one or more continuous areas to be exposed in the current exposure region and the exposure elements assigned to them, which are to be activated, are identified and each continuous area is composed of a core region, one or more central regions with an increasing distance from the core region, and an edge region, and wherein the time-dependent functions of the intensity profiles of the exposure elements are selected in such a way that they are started first in the core region, then are started in the central zone or zones successively in the order of their distance from the core region, and finally the exposure elements in the edge region are started.

5. The method as claimed in claim 3 or 4, wherein the time-dependent functions of the intensity profiles of the exposure elements are selected in such a way that the exposure elements of a central region or of the edge region are started only when the exposure elements of the preceding region lying further inward have delivered at least 50% of their integrated intensity for the current exposure step.

6. The method as claimed in claim 5, wherein the time-dependent functions of the intensity profiles of the exposure elements are selected in such a way that the exposure elements of a central region or of the edge region are started only when the exposure elements of the preceding region lying further inward have fully delivered their integrated intensity for the current exposure step.

7. The method as claimed in one of claims 3 to 6, wherein the time-dependent functions of the intensity profiles of the exposure elements are selected in such a way that, during an exposure step, the integrated exposure duration in the edge region is shorter than in the regions lying further inward.

8. The method as claimed in one of claims 3 to 7, wherein the time-dependent functions of the intensity profiles of the exposure elements are defined by pulse sequences having predetermined pulse lengths and periods, and wherein the pulse lengths for the pulse sequences for exposure elements for the edge region are selected to be shorter than those for exposure elements for regions lying further inward.

9. The method as claimed in one of claims 3 to 8, wherein the time-dependent functions of the intensity profiles of the exposure elements are defined by pulse sequences having predetermined pulse lengths and periods, and wherein the periods for the pulse sequences for exposure elements for the edge region are selected to be longer than those for exposure elements for regions lying further inward.

10. The method as claimed in one of the preceding claims, wherein the time-dependent functions of the intensity profiles of the exposure elements are selected in such a way that, during an exposure step, they have a first exposure phase with a low exposure intensity and subsequently a phase having a high intensity at a maximum value for a predetermined period, the time-dependent functions being established in such a way that the first exposure phase with a lower intensity is at least three times as long as the predetermined period at the maximum value.

11. The method as claimed in claim 10, wherein the time-dependent functions of the intensity profiles in the first exposure phase are defined by functions of the form *I*₀*·e*^{*t*/*τ*}, where *I₀* is a constant and *τ* is a predetermined time constant.

12. The method as claimed in one of the preceding claims, wherein, when two or more areas lying next to one another but separated by intermediate spaces are to be exposed in the exposure region, the exposure elements of directly neighboring areas are controlled as a function of time in such a way that the exposure of directly neighboring areas takes place with a time offset with respect to one another.

## Revendications

1. Procédé de constitution d'un corps moulé (10) en matériau photopolymérisable en utilisant une fabrication générative basée sur la lithographie (prototypage rapide), pour lequel sur une plateforme de construction, une couche en matériau liquide, photopolymérisable est définie, la couche est polymérisée dans une étape d'exposition par une unité d'exposition dans une zone d'exposition avec un contour prescrit, une autre couche en matériau photopolymérisable est définie, la couche définie en dernier est polymérisée dans une autre étape d'exposition dans une zone d'exposition avec un contour prescrit pour la couche définie en dernier, et les deux dernières étapes sont répétées jusqu'à ce que par la suite de couches durcies avec des contours prescrits par couche, un corps moulé avec une forme prescrite soit formé, dans lequel chaque exposition est effectuée dans une zone d'exposition avec un contour prescrit par activation commandée d'éléments d'exposition individuels d'un champ en deux dimensions d'éléments d'exposition, dans lequel à chaque élément d'exposition est associé un élément d'image et les éléments d'image éclairés définissent ensemble la zone d'exposition, dans lequel l'exposition de la zone d'exposition est effectuée par une source de lumière commune et un modulateur d'intensité de lumière (4) à deux dimensions éclairé par la source de lumière (2) avec une trame de modulateurs d'intensité commandables individuellement de sorte que chaque modulateur d'intensité éclairé forme un élément d'exposition qui éclaire un élément d'image dans la zone d'exposition, dans lequel pour chaque étape d'exposition d'une couche, une matrice à deux dimensions est établie, dans lequel chaque élément de la matrice est associé à un élément d'exposition du champ des éléments d'exposition et contient des ordres de commande pour cet élément d'exposition sous la forme d'une fonction dépendant du temps qui fixe individuellement l'étendue d'intensité du rayonnement de l'élément d'exposition par le biais de l'étape d'exposition, **caractérisé en ce que** dans la mesure où dans une étape d'exposition, une part, commune à toutes les fonctions dépendant du temps des étendues d'intensité des éléments d'exposition à activer, des variations d'intensité est présente comme variation d'intensité commune, cette variation d'intensité commune est effectuée par commande de l'intensité de la source de lumière (2) selon la variation d'intensité commune.

2. Procédé selon la revendication 1, **caractérisé en ce que** l'intensité de la source de lumière (2) est commandée au cours de l'étape d'exposition de sorte que l'intensité de la source de lumière soit réglée à chaque moment selon les fonctions dépendant du temps à la valeur la plus basse, qui suffit encore afin d'alimenter encore les éléments d'image à éclairer momentanément le plus fortement, en l'intensité qui leur est nécessaire.

3. Procédé selon la revendication 1 ou 2, **caractérisé en ce que** dans une étape d'exposition dans la zone d'exposition actuelle, une ou plusieurs surfaces à exposer contiguës et les éléments d'exposition à activer associés à celles-ci sont identifiés et chaque surface contiguë est composée d'une zone centrale et d'une zone de bord, dans lequel les fonctions dépendant du temps des étendues d'intensité des éléments d'exposition sont choisies de sorte que celles-ci soient démarrées plus tôt dans la zone centrale que les éléments d'exposition dans la zone de bord.

4. Procédé selon la revendication 1 ou 2, **caractérisé en ce que** dans une étape d'exposition dans la zone d'exposition actuelle, une ou plusieurs surfaces à exposer contiguës et les éléments d'exposition à activer associés à celles-ci sont identifiés et **en ce que** chaque surface contiguë est composée d'une zone centrale, d'une ou de plusieurs zones médianes de distance croissante de la zone centrale et d'une zone de bord et **en ce que** les fonctions dépendant du temps des étendues d'intensité des éléments d'exposition sont choisies de sorte que celles-ci soient tout d'abord démarrées dans la zone centrale, puis soient démarrées successivement dans la ou les zones médianes dans l'ordre de leur distance de la zone centrale, et finalement les éléments d'exposition soient démarrés dans la zone de bord.

5. Procédé selon la revendication 3 ou 4, **caractérisé en ce que** les fonctions dépendant du temps des étendues d'intensité des éléments d'exposition sont choisies de sorte que les éléments d'exposition d'une zone médiane ou de la zone de bord ne soient démarrés que si les éléments d'exposition de la zone précédente se trouvant plus à l'intérieur ont émis au moins 50 % de leur intensité intégrée pour l'étape d'exposition actuelle.

6. Procédé selon la revendication 5, **caractérisé en ce que** les fonctions dépendant du temps des étendues d'intensité des éléments d'exposition sont choisies de sorte que les éléments d'exposition d'une zone médiane ou de la zone de bord ne soient démarrés que si les éléments d'exposition de la zone précédente, se trouvant plus à l'intérieur ont complètement émis leur intensité intégrée pour l'étape d'exposition actuelle.

7. Procédé selon l'une des revendications 3 à 6, **caractérisé en ce que** les fonctions dépendant du temps des étendues d'intensité des éléments d'exposition sont choisies de sorte que dans une étape d'exposition, la durée d'exposition intégrée dans la zone de bord soit plus courte que dans les zones se trouvant plus à l'intérieur.

8. Procédé selon l'une des revendications 3 à 7, **caractérisé en ce que** les fonctions dépendant du temps des étendues d'intensité des éléments d'exposition sont définies par des suites d'impulsion avec des longueurs d'impulsion et périodes prescrites et **en ce que** pour les suites d'impulsion pour des éléments d'exposition pour la zone de bord, les longueurs d'impulsion sont choisies plus petites que celles pour des éléments d'exposition pour des zones se trouvant plus à l'intérieur.

9. Procédé selon l'une des revendications 3 ou 8, **caractérisé en ce que** les fonctions dépendant du temps des étendues d'intensité des éléments d'exposition sont définies par des suites d'impulsion avec des longueurs d'impulsion et périodes prescrites et **en ce que** pour les suites d'impulsion pour des éléments d'exposition pour la zone de bord, les périodes sont choisies plus grandes que celles pour des éléments d'exposition pour des zones se trouvant plus à l'intérieur.

10. Procédé selon l'une des revendications précédentes, **caractérisé en ce que** les fonctions dépendant du temps des étendues d'intensité des éléments d'exposition sont choisies de sorte qu'elles présentent dans une étape d'exposition une première phase d'exposition avec une plus faible intensité d'exposition et après une phase avec une intensité élevée à une valeur maximale pour une période prescrite, dans lequel les fonctions dépendant du temps sont fixées de sorte que la première phase d'exposition avec une intensité plus faible soit au moins trois fois plus longue que la période prescrite à la valeur maximale.

11. Procédé selon la revendication 10, **caractérisé en ce que** les fonctions dépendant du temps des étendues d'intensité dans la première phase d'exposition sont définies par des fonctions de la forme I₀•e^{t/T}, dans lequel I₀ est une constante et T une constante de temps prescrite.

12. Procédé selon l'une des revendications précédentes, **caractérisé en ce que** si plusieurs surfaces séparées par des espaces intermédiaires, se trouvant côte à côte sont à exposer dans la zone d'exposition, les éléments d'exposition sont commandés temporellement par des surfaces directement contiguës de sorte que l'exposition de surfaces directement contiguës soit effectuée en décalage temporellement les unes aux autres.
